# EUROPÄISCHE PATENTSCHRIFT

(11) **EP 3 792 192 B1**
(45) Veröffentlichungstag und Bekanntmachung des Hinweises auf die Patenterteilung: **09.08.2023**
(21) Anmeldenummer: 20196384.0
(22) Anmeldetag: 16.09.2020
(51) Int. Cl.: B65D 30/08, B65D 30/20, B65D 33/02, B65D 75/58

(54) **VERPACKUNGSBEUTELANORDNUNG SOWIE VERFAHREN ZUR HERSTELLUNG UND HANDHABUNG DER VERPACKUNGSBEUTELANORDNUNG**
PACKAGING BAG ASSEMBLY AND METHOD FOR MANUFACTURING AND HANDLING THE PACKAGING BAG ASSEMBLY
AGENCEMENT DE SACS D'EMBALLAGE AINSI QUE PROCÉDÉ DE FABRICATION ET DE MANIPULATION DE L'AGENCEMENT DE SACS D'EMBALLAGE

(30) Priorität: 16.09.2019 DE 102019124821
(43) Veröffentlichungstag der Anmeldung: 17.03.2021
(73) Patentinhaber: Mondi AG, 1030 Wien (AT)
(72) Erfinder: Kösters, Jens, 49134 Wallenhorst (DE)
(74) Vertreter: Andrejewski - Honke Patent- und Rechtsanwälte Partnerschaft mbB

(56) Entgegenhaltungen:
- EP-A1- 2 284 090
- EP-A2- 0 121 041
- EP-B1- 0 121 041
- EP-B1- 2 284 090
- AT-U1- 14 671
- CH-A- 392 236
- US-A- 3 850 366
- US-A- 3 958 749
- US-A- 4 088 264
- US-A- 5 393 143
- US-A1- 2011 212 815

## Beschreibung

Die Erfindung betrifft eine Verpackungsbeutelanordnung mit einem Außenbeutel auf Papierbasis und einem von dem Außenbeutel umgegebenen Innenbeutel aus Kunststofffolie, wobei der Innenbeutel und der Außenbeutel jeweils zwei einander gegenüberliegende Frontwände und zwischen den Frontwänden angeordnete Seitenfalten aufweisen und wobei der Innenbeutel und der Außenbeutel zumindest unterhalb eines Kopfbereiches im Wesentlichen unverbunden sind. Die Erfindung beschäftigt sich des Weiteren mit einem Verfahren zur Herstellung der Verpackungsbeutelanordnung sowie einem Verfahren zur Handhabung einer befüllten und verschlossenen Verpackungsbeutelanordnung.

Verpackungsbeutelanordnungen mit einem Außenbeutel auf Papierbasis und einem von dem Außenbeutel umgegebenen Innenbeutel aus Kunststofffolie werden auch als zwei- bzw. mehrwandige Beutel oder auch als Beutel-in-Beutel-Verpackungen bezeichnet.

Bei derartigen Verpackungsbeutelanordnungen ist bekannt, den Außenbeutel und den Innenbeutel auch für ein Recycling voneinander zu trennen, wobei insbesondere ein separates Recycling in Betracht kommt. Im Vergleich zu mehrschichtigen Verbunden wie beispielsweise Getränkekartons mit einer Barriereschicht aus Aluminium und einer innenliegenden Kunststoffschicht ist dann keine aufwendige Trennung notwendig.

Der Außenbeutel auf Papierbasis kann vorzugsweise mit anderem Papierabfall aufbereitet und wiederverwertet werden, wobei der Innenbeutel einen herkömmlichen Kunststoffbeutel bildet.

Als weiterer Vorteil ergibt sich zudem, dass der Innenbeutel auch unbedruckt und frei von Farbstoffen, insbesondere Pigmenten, gebildet sein kann, weil bei einer Verpackung übliche Aufdrucke wie ein Dekor, Gebrauchsinformationen oder dergleichen auf dem Außenbeutel angebracht sein können.

Die beschriebenen Verpackungsbeutelanordnungen werden häufig als doppelwandiger Schlauch gefertigt, wobei dann sukzessive zunächst ein erster Schlauch aus Kunststofffolie für den Innenbeutel und danach an der Außenseite ein zweiter Schlauch auf Papierbasis für den Außenbeutel erzeugt wird. Ein solches Herstellungsverfahren sowie die damit gebildete Verpackungsbeutelanordnung sind aus DE 10 2008 029 285 A1 sowie US 3 190 441 bekannt.

Eine gattungsgemäße Verpackungsbeutelanordnung ist aus US 5 529 396 bekannt, wobei die Herstellung insgesamt aufwendig ist. Schwierig ist insbesondere das Verschließen des Beutels von seiner Unterseite sowie an seiner Oberseite. Um an der Unterseite eine Verbindung von Innenbeutel und Außenbeutel zu vermeiden, ist dort eine spezielle Releasebeschichtung vorgesehen.

Eine weitere gattungsgemäße Verpackungsbeutelanordnung ist aus US 4 088 264 bekannt. Um den Innenbeutel aus Kunststofffolie auch durch den Außenbeutel hindurch heißsiegeln zu können, ist der Außenbeutel auf Papierbasis an seiner Innenseite unbeschichtet. Lediglich für ein Verschließen durch einen Überschlag wird der Außenbeutel an seinem oberen Rand sowie an seinem unteren Rand mit Heißschmelzklebstoff versehen. Durch Heißsiegeln sowie einer Art Prägevorgang kann bei der Verpackungsbeutelanordnung ein geschlossener Hauptkörper des Innenbeutels gebildet werden, der nicht mehr mit dem Außenbeutel verbunden ist. Nach einem Aufreißen des Außenbeutels kann dieser befüllte Hauptkörper vollständig entnommen werden. Es ergibt sich jedoch der Nachteil, dass in endseitigen Überschlägen des Außenbeutels abgetrennte Abschnitte des Innenbeutels verbleiben, so dass dadurch ein sortenreines Recycling erheblich erschwert wird.

Aus US 5 007 233 und US 2 522 200 ist es bekannt, den Außenbeutel und den Innenbeutel vorzufertigen und dann den Innenbeutel in den Außenbeutel einzusetzen. Lediglich gemäß der US 2 522 200 sind bei dem Außenbeutel Seitenfalten vorgesehen, wobei bei dem Innenbeutel für das Einschieben Ränder lediglich umgeschlagen sind, ohne Seitenfalten zu bilden. Schließlich ist aus US 5 393 143 A eine Verpackungsbeutelanordnung gemäß dem Oberbegriff des Anspruchs 1 bekannt.

Der vorliegenden Erfindung liegt die Aufgabe zugrunde, eine Verpackungsbeutelanordnung anzugeben, die einerseits gute Recyclingeigenschaften aufweist und sich andererseits durch gute Funktionseigenschaften auszeichnet. Des Weiteren sollen auch ein Verfahren zur Herstellung der Verpackungsbeutelanordnung sowie ein Verfahren zur Handhabung der befüllten und verschlossenen Verpackungsbeutelanordnung angegeben werden.

Gegenstand der Erfindung und Lösung der Aufgabe sind eine Verpackungsbeutelanordnung gemäß Patentanspruch 1 sowie die Verfahren gemäß der Ansprüche 25 und 28.

Die Erfindung betrifft demnach gemäß einem ersten Aspekt eine gattungsgemäße Verpackungsbeutelanordnung, die dadurch gekennzeichnet ist, dass der Außenbeutel und/oder der Innenbeutel die jeweiligen Frontwände mit den anschließenden Seitenfalten verbindende Längssiegelnähte aufweist.

Durch die Längssiegelnähte weist der Außenbeutel und/oder der Innenbeutel eine deutlich verbesserte Standfähigkeit und Stabilität auf. Dabei ist zu berücksichtigen, dass sowohl für den Außenbeutel als auch für den Innenbeutel möglichst dünnes Papier bzw. eine dünne Kunststofffolie eingesetzt werden soll, so dass sich alleine aus einem solchen flexiblen Material eine geringere Festigkeit ergibt. Selbst wenn gemäß dem Stand der Technik durch Seitenfalten eine gewisse Quaderform vorgegeben ist, ergibt sich je nach Füllgut und Füllstand gemäß dem Stand der Technik eine erhebliche Verformung. Aber auch im befüllten Zustand kann die erfindungsgemäße Verpackungsbeutelanordnung besser gestapelt oder beispielsweise in einem Ladenregal aufgereiht werden.

Die Längssiegelnähte tragen dabei auch bei einem Benutzer zu einem verbesserten Qualitätseindruck bei. Durch die an den Längssiegelnähten klar gegeneinander abgegrenzten Frontwänden und Seitenfalten können auch besonders gut verschiedene Benutzerinformationen, Markennamen, Dekore oder dergleichen strukturiert und gut erkennbar angeordnet werden.

Schließlich kann im Rahmen der Erfindung auch vorgesehen sein, dass durch die Längssiegelnähte separate Abschnitte zur Bildung der Frontwände sowie zur Bildung der Seitenfalten bei dem Herstellungsprozess miteinander verbunden werden, so dass sich im Rahmen der Erfindung eine besonders vielseitige Gestaltungsmöglichkeit ergibt.

Gemäß einer bevorzugten Ausgestaltung der Erfindung ist vorgesehen, dass der Außenbeutel und der Innenbeutel die jeweiligen Frontwände mit den anschließenden Seitenfalten verbindende Längssiegelnähte aufweist, welche zumindest unterhalb des Kopfbereiches untereinander unverbunden sind. Die beschriebenen Vorteile einer besseren Formstabilität ergeben sich dann sowohl für den Außenbeutel als auch für den Innenbeutel.

Während der Außenbeutel und der Innenbeutel unterhalb des Kopfbereiches untereinander im Wesentlichen unverbunden sind, ist zweckmäßigerweise an dem Kopfbereich eine Verbindung von Außenbeutel und Innenbeutel vorgesehen, um eine kompakte, zusammenhängende Verpackungsbeutelanordnung zu bilden. Dabei sind grundsätzlich unterschiedliche Arten der Verbindung denkbar. Ziel ist dabei im Rahmen der Erfindung, dass nach einem Auftrennen der Verbindung und/oder einem Aufreißen des Außenbeutels der Innenbeutel leicht aus dem Außenbeutel oder zumindest einem Hauptkörper des Außenbeutels entnommen und separat gehandhabt werden kann.

Wenn der Außenbeutel und der Innenbeutel an dem Kopfbereich durch eine peelbare, das heißt auftrennbare Verbindung miteinander verbunden sind, so kann dann der gesamte Innenbeutel aus dem Außenbeutel herausgenommen werden.

Des Weiteren ist es auch möglich, dass für ein Öffnen der befüllten und verschlossenen Verpackungsbeutelanordnung ein Kopfstück des Außenbeutels von einem Hauptkörper des Außenbeutels abgetrennt wird, wobei dann der Innenbeutel gegenüber dem Hauptkörper des Außenbeutels im Wesentlichen unverbunden ist und so leicht aus dem Hauptkörper des Außenbeutels herausgenommen werden kann. Besonders bevorzugt ist überhaupt keine Verbindung zwischen dem Innenbeutel und dem Hauptkörper des Außenbeutels vorgesehen. Grundsätzlich kommt aber auch dort eine auftrennbare Verbindung, beispielsweise für eine Stabilisierung grundsätzlich in Betracht.

Verschiedene im Rahmen der Erfindung mögliche Handhabungen werden nachfolgend noch weiter beschrieben.

Die Erfindung bezieht sich sowohl auf eine noch nicht befüllte als auch auf eine mit einem Füllgut gefüllte Verpackungsbeutelanordnung. Im befüllten Zustand ist dabei der Innenbeutel zweckmäßigerweise dicht verschlossen. Durch den dichten Verschluss ist das Füllgut gegen einen Verlust und gegen die Verunreinigung durch Fremdstoffe von außen weitgehend geschützt. Wie üblich soll dabei jedoch nicht ausgeschlossen sein, dass der Innenbeutel in bekannter Weise Ventile, kleine Entlüftungslöcher oder Kanäle aufweist. Des Weiteren ist je nach Verpackungsgut auch die übliche Diffusion von Gasen und Wasserdampf durch die Kunststofffolie hindurch zu berücksichtigen.

Zweckmäßigerweise liegt im befüllten Zustand auch der Außenbeutel zumindest im Kopfbereich dicht an dem Innenbeutel an, wobei auch der Außenbeutel dicht verschlossen sein kann, um das Eindringen von Fremdstoffen in den Zwischenraum zwischen Innenbeutel und Außenbeutel zu vermeiden, selbst wenn dadurch nicht unmittelbar das Füllgut beeinträchtigt wird.

Gerade wenn gemäß der zuvor beschriebenen bevorzugten Ausgestaltung der Erfindung sowohl am Außenbeutel als auch an dem Innenbeutel die Längssiegelnähte vorgesehen sind, weisen die Frontwände des Innenbeutels eine geringere Breite als die Frontwände des Außenbeutels auf. Dadurch kann erreicht werden, dass der Innenbeutel trotz der Ausbildung der Längssiegelnähte leicht in dem Außenbeutel angeordnet werden kann. Beispielsweise kann die Breite der Frontwände des Innenbeutels gegenüber der Breite der Frontwände des Außenbeutels um zumindest das doppelte Maß der Breite einer Längssiegelnaht des Außenbeutels reduziert sein, so dass dann bei der Herstellung ein vorgefertigter Innenbeutel zwischen die Längsnähte eines vorgefertigten Außenbeutels eingesetzt werden kann.

Die sich vorzugsweise über die gesamte Höhe des Innenbeutels bzw. des Außenbeutels erstreckenden Längssiegelnähte weisen typischerweise eine Breite zwischen 2 mm und 12 mm, insbesondere zwischen 3 mm und 9 mm auf. Die Breite der Längssiegelnähte ist so zu wählen, dass eine sichere Versteifung und Stabilisierung erreicht wird, während andererseits bei einer zu großen Breite der Aufwand für die Herstellung steigt und zusätzlich bezogen auf das eingesetzte Material das Füllvolumen unnötig reduziert wird.

Wie bereits zuvor beschrieben, ist der Innenbeutel zweckmäßigerweise in einem geeigneten Maße kleiner als der Außenbeutel. So kann insbesondere vorgesehen sein, dass das Volumen des Innenbeutels bezogen auf den unverschlossenen, aufgestellten Zustand zwischen 65 % und 98 %, besonders bevorzugt zwischen 75 % und 96 % des Volumens des Außenbeutels beträgt.

Das Volumenverhältnis hängt dabei auch von der Größe der Verpackung ab. Insbesondere soll dem Umstand Rechnung getragen werden, dass das Volumen des Außenbeutels durch die Ausbildung der Längssiegelnähte reduziert ist, während bei dem Innenbeutel die Längssiegelnähte einerseits zu einer Volumenreduzierung führen und andererseits als eine Art Überstand in dem Außenbeutel aufgenommen werden müssen. Trotz des unterschiedlichen Volumens ist dann im Rahmen der Erfindung vorzugsweise vorgesehen, dass der Innenbeutel nur mit einem geringen Abstand zu den Frontwänden und Seitenfalten des Außenbeutels angeordnet ist. Gerade im Rahmen einer solchen Ausgestaltung kann dann der Innenbeutel auch wesentlich zu der Formstabilität der gesamten Verpackungsbeutelanordnung beitragen.

Gemäß einer bevorzugten Ausgestaltung der Erfindung ist in diesem Zusammenhang vorgesehen, dass der Innenbeutel wesentlich für die geforderten mechanischen Eigenschaften wie beispielsweise die Stabilität und eine Fallsicherheit verantwortlich ist, während dann der Außenbeutel auf Papierbasis zu einer Versteifung beiträgt und bedruckt werden kann.

Die Längssiegelnähte von Innenbeutel und/oder Außenbeutel können auf unterschiedliche Weise gebildet werden, wobei auch eine Verbindung durch Klebstoff nicht ausgeschlossen ist. Während der Innenbeutel aus Kunststofffolie bei üblichen Materialien heißsiegelbar ist und so Längssiegelnähte auch leicht durch Heißsiegeln gebildet werden können, ist bevorzugt auch für die Innenseite des Außenbeutels zumindest abschnittsweise eine heißsiegelbare Schicht vorgesehen, so dass dann auch die Längsnähte des Außenbeutels als Heißsiegelnähte gebildet werden können.

Die heißsiegelbare Schicht an der Innenseite des Außenbeutels weist typischerweise eine Dicke zwischen 0,5 µm und 10 µm auf, wobei die Beschichtung auf unterschiedliche Art und Weise aufgebracht werden kann. Neben einer Extrusionskaschierung kann auch eine heißsiegelbare Schicht einschließlich Schmelzklebstoff aufgesprüht, aufgestrichen oder aufgedruckt werden.

Die heißsiegelbare Schicht kann lediglich abschnittsweise vorgesehen sein, um die Längsnähte und gegebenenfalls auch noch Verbindungen am Boden oder an dem Kopf der Verpackungsbeutelanordnung zu bilden. Nachteilig ist dabei jedoch, dass gezielt die entsprechenden Stellen beschichtet werden müssen.

Des Weiteren kann auch eine vollflächige Beschichtung vorgesehen sein, so dass dann für die Bildung des Außenbeutels eine im Wesentlichen homogene Endlosbahn bereitgestellt werden kann. Gerade bei einer vollflächigen Beschichtung ist eine besonders geringe Schichtdicke zweckmäßig, die gerade zur Ausbildung der Heißsiegelnähte ausreichend ist.

Wenn die heißsiegelbare Beschichtung von einem klassischen polymeren Material gebildet ist, ist der Außenbeutel zwar auf Papierbasis gebildet, die zumindest eine Schicht aus Papier bildet dann jedoch zusammen mit der vorzugsweise lediglich dünnen Beschichtung eine Art Verbundstoff, der hinsichtlich eines herkömmlichen Papier-Recyclings problematisch sein kann.

Gemäß einer bevorzugten Weiterbildung der Erfindung ist deshalb vorgesehen, dass die heißsiegelbare Schicht an der Innenseite des Außenbeutels aus einem biologisch abbaubaren, insbesondere kompostierbaren Material, insbesondere einem entsprechenden Polymermaterial besteht. Typische Materialien sind beispielsweise thermoplastische Stärke (TPS), Polylactid (PLA), Polyhydroxyalkanoate (PHA) und Polybutylenadipat-terephthalat (PBAT) als abbaubares Polyester. Diese lediglich exemplarisch genannten Materialien können auch in Mischungen vorgesehen sein.

Weitere Informationen zu der Definition von biologisch abbaubaren Kunststoffen, weiterer geeigneter Materialien und die Eigenschaften einschließlich der Abbaueigenschaften entsprechender Materialien sind den Veröffentlichungen "Gutachten zur Behandlung biologisch abbaubarer Kunststoffe", Veröffentlichung des Umweltbundesamtes TEXTE 57/18, "Untersuchung der Umweltwirkungen von Verpackungen aus biologisch abbaubaren Kunststoffen", Veröffentlichung des Umweltbundesamtes TEXTE 52/2012 und der Broschüre des Bundesumweltamtes "Hintergrund - Biologisch abbaubare Kunststoffe", 2009 zu entnehmen.

Dabei ist zu beachten, dass vollständig aus biologisch abbaubaren Kunststoffen gebildete Beutel wie sie beispielsweise für Biomüll und Hundekot eingesetzt werden, in der Praxis und in der Fachliteratur sowohl hinsichtlich des Herstellungsaufwandes als auch hinsichtlich ihrer biologischen Abbaubarkeit umstritten sind. Im Rahmen der Erfindung ergibt sich jedoch der Vorteil, dass für die Bereitstellung einer heißsiegelbaren Schicht nur eine sehr dünne Schichtdicke notwendig ist, so dass sich insgesamt in Bezug auf das eingesetzte Material eine sehr große Oberfläche ergibt. Es wird deshalb angenommen, dass sich alleine dadurch eine deutliche Verbesserung der biologischen Abbaubarkeit ergibt.

Darüber hinaus ist im Rahmen der Erfindung die heißsiegelbare Schicht benachbart zu einer Schicht aus Papier angeordnet und vorzugsweise unmittelbar auf die Schicht aus Papier aufgebracht. Hinsichtlich der Zersetzung und des Abbaus des biologisch abbaubaren Kunststoffes kann auch die angrenzende üblicherweise hydrophile bzw. saugende Schicht aus Papier von Vorteil sein, weil ein feuchtes Milieu bei vielen Materialien eine Zersetzung zusätzlich befördert.

Erfindungsgemäß ist der Außenbeutel auf Papierbasis gebildet, das heißt Papier bildet den Hauptbestandteil des Außenbeutels. Gemäß einer bevorzugten Ausgestaltung der Erfindung ist vorgesehen, dass der Außenbeutel eine Papierlage mit einem Flächengewicht zwischen 30 g/m² und 120 g/m², insbesondere zwischen 50 g/m² und 100 g/m² aufweist. Besonders geeignet ist Kraftpapier. Der Begriff Kraftpapier ist im Bereich der Papiertechnik geläufig und bezieht sich auf ein Verpackungspapier aus gebleichtem, meist aber aus ungebleichtem Zellstoff mit hohen statischen und dynamischen Festigkeiten. Entsprechend findet Kraftpapier Verwendung für die Herstellung von Papiersäcken, Tragebeuteln, Tüten und ähnlichen Produkten.

Der Innenbeutel ist dagegen im Rahmen der Erfindung aus Kunststofffolie gebildet. Gemäß einer bevorzugten Ausgestaltung der Erfindung ist dabei vorgesehen, dass der Innenbeutel sortenrein aus Kunststoff einer Polymerklasse, insbesondere einem Polyolefin, gebildet ist. Bei Polyolefin stellen Polyethylen und Polypropylen die in der Praxis häufigsten Polymerklassen dar.

Der Innenbeutel ist also besonders bevorzugt sortenrein aus Polyethylen oder sortenrein aus Polypropylen gebildet. Auch wenn dann innerhalb einer solchen Polymerklasse Materialien mit unterschiedlicher Dichte einschließlich Copolymere eingesetzt werden, ist in der Regel ein gemeinsames Recycling möglich.

Grundsätzlich kann aber auch vorgesehen sein, dass der Innenbeutel aus Polypropylen oder Polyethylen eines gewissen Dichtebereiches gebildet ist. Gerade im Hinblick auf Polyethylen kann eine Unterscheidung zwischen Polyethylen hoher Dichte (HDPE) und Polyethylen niedriger Dichter (LDPE) zweckmäßig sein, weil sich daraus gemäß der Anlage 5 des Deutschen Verpackungsgesetzes vom 5. Juni 2017 (Gesetz zur Fortentwicklung der haushaltsnahen getrennt Erfassung von wertstoffhaltigen Abfällen) unterschiedliche Abkürzungen und Nummern (HDPE Nr. 2 und LDPE Nr. 4) ergeben.

Die Eigenschaften der Kunststofffolie können nicht nur durch die Auswahl der Rohstoffe und gegebenenfalls einen mehrschichtigen Aufbau sondern auch durch die Herstellung, Modifizierung und Verarbeitung der Kunststofffolie beeinflusst werden. Beispielsweise kann die Kunststofffolie monoaxial (110) oder biaxial (BO) orientiert sein, was auch zu verbesserten mechanischen Eigenschaften führen kann. Geeignet sind beispielsweise 110-PE oder BO-PE.

Wenn die Kunststofffolie des Innenbeutels als Monofolie ausgeführt ist, so kann diese aus einem einzigen Polymertyp oder einem Blend gebildet sein. Gemäß einer bevorzugten Ausgestaltung der Erfindung ist die Kunststofffolie für den Innenbeutel eine mehrschichtige Folie, wodurch die mechanischen Eigenschaften, gewünschte Barriereeigenschaften sowie die Heißsiegeleigenschaften weiter beeinflusst werden können.

Insbesondere kann vorgesehen sein, dass bei einem mehrschichtigen Aufbau der Kunststofffolie des Innenbeutels eine Innenschicht und eine Außenschicht unterschiedlicher Heißsiegeleigenschaften aufweisen.

So kann beispielsweise vorgesehen sein, dass die Innenschicht bei einer Heißsiegelung gegen sich selbst eine unauftrennbare Verbindung bildet. Dies ist gerade dann zweckmäßig, wenn im Hinblick auf einen Falltest an den Längssiegelnähten des Innenbeutels ein unerwünschtes Auftrennen und damit eine Zerstörung des Innenbeutels sicher verhindert werden sollen.

Die durch eine Heißsiegelung der Innenschicht erzeugten Heißsiegelnähte sind - wie zuvor beschrieben - für die strukturelle Integrität des Innenbeutels auch bei mechanischer Belastung von unmittelbarer Bedeutung. Im Rahmen einer mehrschichtigen Ausgestaltung der Kunststofffolie des Innenbeutels kann dagegen an der Außenschicht eine gewisse Peelbarkeit zweckmäßig sein, beispielsweise um den Innenbeutel auch im Kopfbereich von dem Außenbeutel trennen zu können. Insbesondere zu diesem Zweck kann die Außenschicht eine die Siegelfestigkeit reduzierende Beimischung aufweisen. So kommt beispielsweise bei einer Kunststofffolie auf der Basis von Polyethylen für die Außenschicht eine Abmischung von Polyethylen mit 0,5 bis 15 % Polybuten in Betracht. Darüber hinaus sind jedoch auch andere die Siegelfestigkeit reduzierende Beimischungen zusätzlich oder alternativ denkbar. Des Weiteren kann zur Beeinflussung der Siegeleigenschaften auch eine Oberflächenbehandlung, beispielsweise eine Corona-Behandlung erfolgen.

Gemäß einem weiteren Aspekt kann bei einer mehrschichtigen Ausgestaltung der Kunststofffolie des Innenbeutels auch vorgesehen sein, dass die Innenschicht eine geringere Siegeltemperatur als die Außenschicht aufweist. Als Siegeltemperatur wird in diesem Zusammenhang die Temperatur bezeichnet, welche für die Ausbildung einer Verbindung durch Heißsiegeln mindestens notwendig ist (minimale Siegeltemperatur). Der Unterschied der Siegeltemperaturen von Innenschicht und Außenschicht kann in der Praxis auch als Siegelfenster bezeichnet werden. Wenn bei dem Heißsiegeln ein entsprechendes Siegelfenster eingehalten wird, kann im Rahmen der Erfindung eine Heißsiegelnaht, wie beispielsweise eine Längssiegelnaht grundsätzlich auch durch den Außenbeutel hindurch erzeugt werden. Wenn dieser gemäß einer bevorzugten Ausgestaltung der Erfindung an seiner Innenseite beschichtet ist, so muss in der Regel auch vermieden werden, dass die entsprechende heißsiegelbare Beschichtung aufschmilzt.

Auch wenn die Längssiegelnähte nicht in der beschriebenen Weise durch den Außenbeutel hindurch gebildet werden sollen, kann eine geringe Siegeltemperatur der Innenschicht vorteilhaft sein, so dass dann bei einem Heißsiegeln bei einer geeigneten Temperatur die Außenschicht in ihrer Struktur nicht wesentlich verändert wird, wodurch Schwachstellen vermieden und ein hochwertiges Erscheinungsbild sichergestellt werden können.

Unabhängig von den zuvor beschriebenen Heißsiegeleigenschaften kann die Kunststofffolie des Innenbeutels beispielsweise dreischichtig mittels Blasfolienextrusion gebildet sein. Bei Polyethylen als Polymerklasse ergibt sich dann exemplarisch ein Aufbau PE/PE/PE.

Die Gesamtdicke der Kunststofffolie liegt typischerweise zwischen 20 µm und 150 µm, insbesondere zwischen 40 µm und 120 µm. Die angegebene Gesamtdicke kann sich dann unterschiedlich auf die exemplarisch genannten drei Schichten verteilen. Neben einer Berücksichtigung der Heißsiegeleigenschaften können auch unterschiedliche Barriereeigenschaften der Schichten vorgesehen sein.

Wie zuvor erläutert, können innerhalb einer vorgegebenen Polymerklasse wie Polyethylen auch Copolymere vorgesehen sein. Beispielsweise kann bei einer Kunststofffolie auf Basis von Polyethylen auch eine Schicht aus EthylenVinylalkohol-Copolymer (EVAL) vorgesehen sein, wobei eine solche Schicht zweckmäßigerweise eine geringe Dicke zwischen typischerweise 1 µm und 10 µm aufweist und als Kernschicht zwischen der Innenschicht und der Außenschicht vorgesehen ist.

Bei der Herstellung des Außenbeutels und des Innenbeutels sind die Seitenfalten üblicherweise zunächst zwischen den Frontwänden eingefaltet. Im befüllten Zustand der Verpackungsbeutelanordnung sind dann die Seitenfalten zumindest in einem unteren Bereich von Innenbeutel und Außenbeutel durch das Füllgut aufgestellt, wodurch sich in der gewünschten Weise in etwa eine Quaderform mit den Verstärkungen durch die Längssiegelnähte ergibt.

Damit die Verpackungsbeutelanordnung an dem Kopfbereich jedoch gut verschlossen werden kann, sind dort die Seitenfalten zweckmäßigerweise nach innen eingefaltet. Demnach ist gemäß einer bevorzugten Ausgestaltung der Erfindung vorgesehen, dass bei dem Innenbeutel und bei dem Außenbeutel jeweils die Seitenfalten in dem Kopfbereich mit zwei Seitenfaltenhälften und einer Knicklinie zwischen den Seitenfaltenhälften zwischen den zugeordneten Frontwänden eingefaltet und zweckmäßigerweise dort fixiert, insbesondere versiegelt sind.

Gemäß einer bevorzugten Weiterbildung dieser Variante ist vorgesehen, dass die Seitenfalten des Innenbeutels mit den darüber liegenden Randbereichen der Frontwände des Innenbeutels in dem Kopfbereich jeweils mit ihren Seitenfaltenhälften zwischen einer Seitenfalte der zugeordneten Seitenfalte des Außenbeutels sowie der angrenzenden Frontwand des Außenbeutels angeordnet ist.

Mit anderen Worten ist in Bezug auf die beiden Seitenfaltenhälften des Außenbeutels der Innenbeutel vollständig "auf einer Seite" angeordnet. Eine solche Anordnung ist insbesondere dann zweckmäßig, wenn - wie nachfolgend noch weiter beschrieben - der Innenbeutel und der Außenbeutel getrennt voneinander gefertigt werden, wobei dann der Innenbeutel in dem Außenbeutel eingeführt wird.

Im Rahmen der Erfindung kann vorgesehen sein, dass der Außenbeutel in dem Kopfbereich über den Innenbeutel vorsteht. Der Innenbeutel ist dann auch an dem Kopfbereich vollständig von dem Außenbeutel umschlossen, wobei der obere Rand des Innenbeutels dann zusätzlich geschützt ist. Alternativ können der Innenbeutel und der Außenbeutel aber auch auf gleicher Höhe oder in etwa auf gleicher Höhe enden.

Im Rahmen der Erfindung wird die sichtbare Außenseite der Verpackungsbeutelanordnung von dem Außenbeutel auf Papierbasis gebildet. Der Außenbeutel auf Papierbasis kann besonders leicht bedruckt werden, wobei das Papier als undurchsichtiges Material das aufgenommene Füllgut einerseits verdeckt und andererseits in einem gewissen Maße vor Lichteinfall schützen kann.

Auch wenn die Kunststofffolie des Innenbeutels in üblicher Weise verschiedenste Füllstoffe enthalten kann, ist gemäß einer bevorzugten Ausgestaltung der Erfindung vorgesehen, dass der Innenbeutel unbedruckt und/oder frei von Farbstoffen einschließlich und insbesondere Pigmenten ist.

Zumindest in Bezug auf die gesamte befüllte und verschlossene Verpackungsbeutelanordnung ist ein Aufdruck auf dem Innenbeutel überhaupt nicht notwendig, weil dieser zunächst gar nicht sichtbar ist. Dabei ist zu beachten, dass übliche Druckfarben im Hinblick auf ein Recycling von Nachteil sind. Einerseits können Druckfarben chemische Bestandteile enthalten, die bei einer Wiederverwertung nachteilig sind, so dass die Einsatzmöglichkeiten eines entsprechenden Recyclates häufig eingeschränkt sind. Darüber hinaus würde sich auch durch die in dem Recyclat enthaltenen Farbstoffe eine unerwünschte Einfärbung oder Eintrübung ergeben, so dass aus entsprechenden Recycling-Rohstoffen lediglich eingefärbte oder zumindest trübe Kunststoffprodukte gefertigt werden könnten. Entsprechende Nachteile ergeben sich auch, wenn der Innenbeutel in der Polymermatrix Farbstoffe und insbesondere Pigmente aufweist, welche als Additive dem Kunststoff zugegeben sind.

Wenn der Innenbeutel dagegen unbedruckt und frei von Farbstoffen ist, kann ein sehr flexibles Recycling erfolgen. Insbesondere können erneut farblose Produkte gebildet werden. So ist es sogar denkbar, dass bei einem sorgfältigen Recycling aus einem Innenbeutel erneut ein entsprechender Innenbeutel gefertigt wird, während gemäß dem Stand der Technik Recyclate häufig nur für geringerwertige Kunststoffprodukte eingesetzt werden.

Gemäß einer bevorzugten Ausgestaltung der Erfindung ist vorgesehen, dass der Außenbeutel und/oder der Innenbeutel einen Flachboden aufweisen, der mittels Verbindungsnähten an die zugeordneten Frontwände und Seitenfalten anschließt. Durch einen solchen Flachboden wird eine optimale Standfestigkeit und zumindest im unteren Abschnitt des Außenbeutels bzw. des Innenbeutels eine sehr gute Quaderform erreicht.

Der Innenbeutel kann auch zumindest ein Funktionselement wie beispielsweise einen Wiederverschluss aufweisen. Derartige Funktionselemente sind zweckmäßigerweise auch wie zuvor beschrieben sortenrein mit der Kunststofffolie des Innenbeutels und zweckmäßigerweise auch ohne Farbstoffe insbesondere Pigmente gebildet.

Wie zuvor beschrieben, kann für eine Trennung des Innenbeutels von dem Außenbeutel oder zumindest einem Hauptkörper des Außenbeutels eine peelbare Verbindung oder ein Aufreißen des Außenbeutels vorgesehen sein.

So ist gemäß einer Variante der Erfindung vorgesehen, dass der Außenbeutel unterhalb des Kopfbereiches eine Aufreißhilfe aufweist. Der Außenbeutel kann beispielsweise eine umlaufende Perforation aufweisen, an der der Hauptkörper des Außenbeutels von einem Kopfstück des Außenbeutels getrennt werden kann. Die Aufreißhilfe kann jedoch auch von zwei in einem Abstand zueinander angeordneten Schwächungslinien gebildet sein, so dass dann umlaufend ein Streifen (üblicherweise ausgehend von einer der Längsnähte) abgerissen werden kann, um eine besonders leichte Trennung zu ermöglichen. Auch separate Elemente wie beispielsweise ein steifer Aufreißstreifen oder dergleichen kommen im Rahmen der Erfindung in Betracht.

Zweckmäßigerweise ist auch bei dem Innenbeutel unterhalb des Kopfbereichs eine Aufreißhilfe in Form einer Schwächungslinie oder dergleichen vorgesehen, um nach der Entnahme des Innenbeutels aus dem Außenbeutel oder zumindest aus dem Hauptkörper des Außenbeutels den Innenbeutel selbst leicht öffnen zu können.

Gegenstand der Erfindung ist auch ein Verfahren zur Herstellung der zuvor beschriebenen Verpackungsbeutelanordnung, wobei ein Außenbeutel aus Papier mit zwei einander gegenüberliegenden Frontwänden, zwei Seitenfalten zwischen den Frontwänden sowie die Frontwände mit den Seitenfalten verbindenden Längsnähten gebildet wird,
ein Innenbeutel aus Kunststoff mit zwei einander gegenüberliegenden Frontwänden, zwei Seitenfalten zwischen den Frontwänden sowie die Frontwände mit den Seitenfalten verbindenden Längsnähten gebildet wird,
der Innenbeutel nach seiner Fertigung vorzugsweise in einem flachgelegten Zustand in den Außenbeutel eingesetzt wird,
der Innenbeutel vorzugsweise nach dem Einsetzen in den Außenbeutel mit einem Füllgut befüllt und nachfolgend verschlossen wird und
der Innenbeutel und der Außenbeutel in einem Kopfbereich miteinander verbunden werden.

Weitere Optionen und Merkmale des Verfahrens ergeben sich auch aus den obigen Erläuterungen zu der Verpackungsbeutelanordnung an sich.

Die Verbindung von Innenbeutel und Außenbeutel in dem Kopfbereich kann entweder permanent oder lösbar, das heißt peelbar sein. Eine permanente Verbindung kann insbesondere durch ein Verkleben oder ein nicht auftrennbares Verschweißen erfolgen. Ein Verschweißen ist insbesondere dann möglich, wenn der Außenbeutel an seiner Innenseite eine heißsiegelbare Schicht bzw. Beschichtung aufweist, die sich zumindest in dem Kopfbereich erstreckt.

Alternativ ist eine punktuelle oder auch flächige peelbare Verbindung möglich, wozu zumindest eine der beiden miteinander zu verbindenden Schichten an der Außenseite des Innenbeutels bzw. der Innenseite des Außenbeutels in spezieller Weise modifiziert sein kann. Wie bereits zuvor erläutert, kann einer Schicht aus Polyethylen an der Außenseite des Innenbeutels oder der Innenseite des Außenbeutels eine Beimischung von typischerweise 0,5 % bis 15 % Polybuten aufweisen, um die Peelbarkeit zu verbessern. Darüber hinaus kann die Siegelfestigkeit auch durch die Zugabe von Kreide oder eines anderen Füllstoffes reduziert werden. Im Hinblick auf das Recycling des Innenbeutels wird ein solches Additiv zweckmäßigerweise bei der innenseitigen Beschichtung des Außenbeutels vorgesehen, weil Kreide bei einem Papierrecycling in der Regel unkritisch ist.

Anstelle eines üblichen Versiegelns kann auch eine peelbare Verbindung durch Klebstoff, insbesondere Hotmelt-Klebstoff erreicht werden. Schließlich kann auch durch die Art der Versiegelung die Verbundfestigkeit beeinflusst werden. Beispielsweise kann bei einer Versiegelung mittels Ultraschall durch die Siegelparameter die Festigkeit gut eingestellt werden.

Wie bereits auch im Zusammenhang mit der Verpackungsbeutelanordnung an sich erläutert, ist gemäß einer bevorzugten Weiterbildung des Verfahrens zur Herstellung der Verpackungsbeutelanordnung vorgesehen, dass für den Innenbeutel und/oder den Außenbeutel die Frontwände und die Seitenfalten aus separaten Abschnitten gebildet werden, die durch die Längsnähte miteinander verbunden werden. Gerade im Rahmen eines solchen Herstellungsverfahrens kann auch für den Innenbeutel und/oder den Außenbeutel ein separater Abschnitt als Flachboden bereitgestellt und an Verbindungsnähten mit den zugeordneten Frontwänden und Seitenfalten verbunden werden.

Gegenstand der Erfindung ist schließlich auch noch ein Verfahren zur Handhabung einer befüllten und verschlossenen Verpackungsanordnung, die wie zuvor beschrieben ausgeführt ist. Im Rahmen des Verfahrens ist vorgesehen, dass der Außenbeutel unterhalb einer Verbindung von Außenbeutel und Innenbeutel an dem Kopfbereich abgerissen wird, so dass ein Kopfstück des Außenbeutels von einem Hauptkörper des Außenbeutels abgetrennt wird und der Innenbeutel gegenüber dem Hauptkörper des Außenbeutels im Wesentlichen unverbunden ist. Der Innenbeutel kann dann aus dem Hauptkörper des Außenbeutels herausgehoben werden, wobei der Hauptkörper des Außenbeutels dann vollständig auf Papierbasis gebildet ist. Wenn also bei dem Außenkörper ein unbeschichtetes Papier, insbesondere Kraftpapier oder ein Papier mit einer biologisch abbaubaren Polymerbeschichtung vorgesehen ist, kann der Hauptkörper des Außenbeutels getrennt gehandhabt, kompostiert und gegebenenfalls auch recycelt werden.

Das Verfahren zur Handhabung der befüllten und verschlossenen Verpackungsbeutelanordnung sieht des Weiteren vor, dass nach dem Aufreißen des Außenbeutels ein Kopfstück des Innenbeutels, gegebenenfalls mit dem daran verbleibenden oder zumindest zunächst verbleibenden Kopfstück des Außenbeutels, von einem Hauptkörper des Innenbeutels zumindest teilweise abgetrennt wird. Das Füllgut kann dann aus dem Innenbeutel entnommen werden. Im Rahmen der Erfindung ist sodann vorgesehen, dass der Hauptkörper des Außenbeutels und der Hauptkörper des Innenbeutels getrennt voneinander entsorgt werden.

Gerade wenn der Innenbeutel und der Außenbeutel im Kopfbereich dauerhaft miteinander verbunden sind, verbleibt das Kopfstück des Außenbeutels an dem Kopfstück des Innenbeutels, wobei dann dieser Abschnitt aus den beiden Kopfstücken separat zu dem Hauptkörper des Außenbeutels und dem Hauptkörper des Innenbeutels entsorgt wird.

Bei der befüllten und verschlossenen Verpackungsbeutelanordnung dient der Außenbeutel als blickdichte Hülle und Untergrund für einen Aufdruck. Des Weiteren trägt der Außenbeutel zu der Stabilität der gesamten Verpackungsbeutelanordnung bei.

Nach der Entnahme des Innenbeutels ist es dann möglich, dass der Außenbeutel oder zumindest der Hauptkörper des Außenbeutels unmittelbar entsorgt wird. Es sind aber auch Konstellationen denkbar, bei der der Außenbeutel bzw. der Hauptkörper des Außenbeutels nach dem Aufreißen noch genutzt werden kann. Beispielsweise ist es denkbar, dass nach dem Öffnen der Verpackungsbeutelanordnung in dem Innenbeutel aufgenommenes Füllgut nach dem Aufreißen des Innenbeutels in den Hauptkörper der Außenbeutels geschüttet wird. Wenn der Außenbeutel Längssiegelnähte aufweist, zeichnet sich dieser durch eine gute Stabilität und Festigkeit aus. Wenn des Weiteren gemäß einer bevorzugten Ausgestaltung der Erfindung auch ein Standboden, insbesondere durch einen separaten Abschnitt gebildet ist, weist der Hauptkörper des Außenbeutels eine gute standfähige Rechteckform auf. Snack-Produkte wie Popcorn, Chips und Salzgebäck im Allgemeinen können dann von einem Benutzer nach einem Umfüllen aus dem Außenbeutel konsumiert werden.

Die beschriebenen Eigenschaften können auch bei Großveranstaltungen für ein verbessertes Abfallmanagement genutzt werden. Beispielsweise kann bereits bei der Ausgabe entsprechender Produkte ein Umfüllen von einem Bedienpersonal durchgeführt werden, wobei durch das Bedienpersonal auch eine ordnungsgemäße Entsorgung des Innenbeutels und der gegebenenfalls separat anfallenden Kopfstücke sichergestellt werden kann. Wenn dann der Außenbeutel lediglich aus Papier oder einem mit biologisch abbaubarem Polymer beschichteten Papier gebildet ist, kann der entsprechende Abfall insgesamt mit übrigen Abfällen kompostiert werden. Es kommt dann auch nicht darauf an, ob Essensreste in dem Hauptkörper des Außenbeutels verbleiben. Selbst wenn der Hauptkörper des Außenbeutels achtlos weggeworfen wird, so kann dieser dann zumindest vollständig verrotten.

Die Erfindung wird im Folgenden anhand einer lediglich ein Ausführungsbeispiel darstellenden Zeichnung erläutert. Es zeigen:
- Fig. 1: einen Außenbeutel auf Papierbasis und einen Innenbeutel aus Kunststofffolie zur Bildung einer Verpackungsbeutelanordnung,
- Fig. 2: das Einsetzen des Innenbeutels in den Außenbeutel in einem flachgelegten Zustand,
- Fig. 3: eine Draufsicht auf eine Ecke der aus dem Außenbeutel und dem Innenbeutel gebildeten Verpackungsbeutelanordnung,
- Fig. 4a: einen Schnitt durch die Verpackungsbeutelanordnung gemäß der Fig. 3 an einem Kopfbereich,
- Fig. 4b: einen Schnitt durch die Verpackungsbeutelanordnung gemäß der Fig. 3 unterhalb des Kopfbereiches,
- Fig. 5a bis 5d: die Handhabung einer befüllten und zunächst verschlossenen Verpackungsbeutelanordnung.

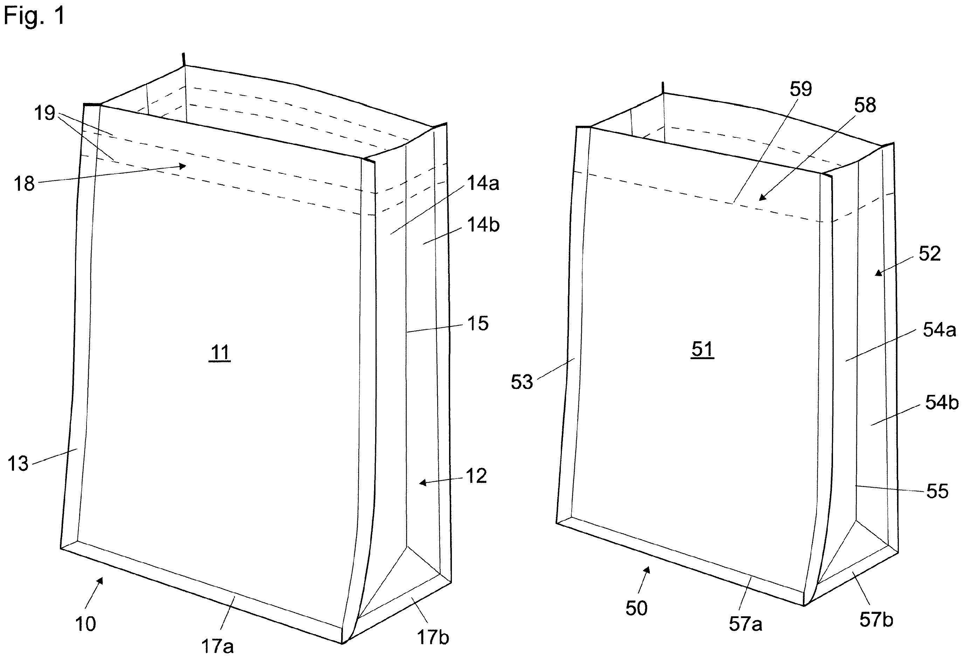

Die Fig. 1 zeigt einen Außenbeutel 10 auf Papierbasis und einen Innenbeutel 50 aus Kunststofffolie. Wie nachfolgend beschrieben, ist der Innenbeutel 50 dazu vorgesehen, in den Außenbeutel 10 eingesetzt zu werden und mit dem Außenbeutel 10 gemeinsam eine Verpackungsbeutelanordnung zu bilden.

Der Innenbeutel 10 und der Außenbeutel 50 weisen jeweils zwei einander gegenüberliegende Frontwände 11, 51 und zwei zwischen den Frontwänden 11, 51 angeordnete Seitenfalten 12, 52 auf. Des Weiteren ist zu erkennen, dass sowohl bei dem Außenbeutel 10 als auch bei dem Innenbeutel 50 Längsnähte 13, 53 vorgesehen sind, welche die jeweiligen Frontwände 11, 51 mit den anschließenden Seitenfalten 12, 52 verbinden. Die Seitenfalten 12, 52 weisen jeweils zwei Seitenfaltenhälften 14a, 14b, 54a, 54b auf, die über eine mittige Knicklinie 15, 55 ineinander übergehen.

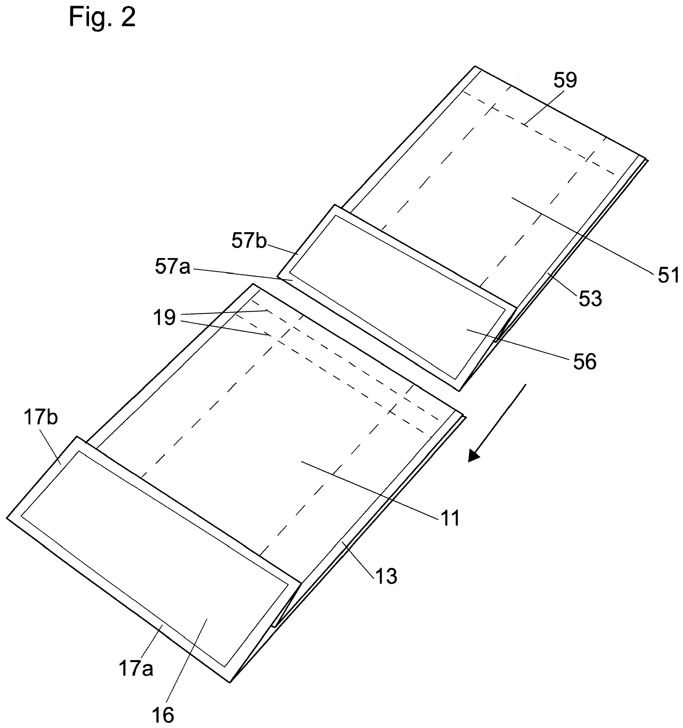

Des Weiteren ist zu erkennen, dass der Außenbeutel 10 und der Innenbeutel 50 quaderförmig sind, wobei zur Ausbildung eines ebenen Flachbodens als Standfläche jeweils ein separater Abschnitt 16, 56 (vgl. Fig. 2) über Verbindungsnähte 17a, 17b, 57a, 57b an die zugeordneten Frontwände 11, 51 und Seitenfalten 12, 52 anschließt.

Der Außenbeutel 10 und der Innenbeutel 50 werden vorzugsweise vorproduziert, wobei diese dann jedoch während des Herstellungsprozesses in einem flachgelegten Zustand verbleiben können, wie er auch in der Fig. 2 dargestellt ist.

Gemäß der Fig. 2 wird der Innenbeutel 50 in den Außenbeutel 10 eingeschoben. Zu diesem Zweck weisen die Frontwände 51 des Innenbeutels 50 eine geringe Breite als die Frontwände 11 des Außenbeutels 10 auf. Insbesondere sind die Frontwände 51 einschließlich der Längsnähte 53 des Innenbeutels nur so breit ausgeführt, dass diese klemmfrei zwischen die Längssiegelnähte 13 des Außenbeutels 10 eingeschoben werden können.

In dem dargestellten flachgelegten Zustand von Außenbeutel 10 und Innenbeutel 50 ist der als Flachboden vorgesehene Abschnitt 16, 56 auf eine der Frontwände 11, 51 zurückgeklappt. Bei dem Befüllen der Verpackungsbeutelanordnung kann sich der Abschnitt 16, 56 wieder so aufstellen, dass sich zumindest im unteren Bereich der Verpackungsbeutelanordnung eine Quaderform entsprechend der Fig. 1 ergibt.

Gemäß der Fig. 1 sind sowohl an dem Außenbeutel 11 als aus an dem Innenbeutel 51 Aufreißhilfen 18, 58 vorgesehen. Die Aufreißhilfe 18 an dem Außenbeutel wird dabei von einem Streifen gebildet, der von zwei Schwächungslinien 19, insbesondere Perforationen begrenzt ist. Um - wie nachfolgend weiter beschrieben - den Außenbeutel 10 aufzureißen, kann der von den Schwächungslinien 19 begrenzte Streifen um den gesamten Umfang herausgerissen werden.

Bei dem Innenbeutel 50 ist die Aufreißhilfe 58 in dem dargestellten Ausführungsbeispiel lediglich von einer Schwächungslinie 59 gebildet.

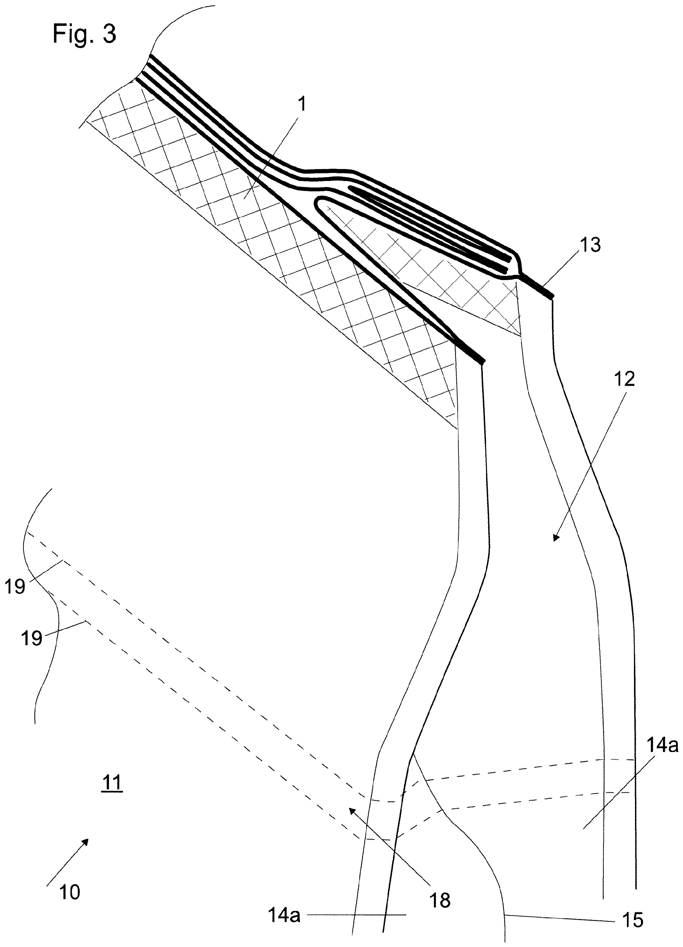

Die Fig. 3 zeigt eine befüllte und geschlossene Verpackungsbeutelanordnung, wobei der Innenbeutel 50 wie zuvor beschrieben in dem Außenbeutel 10 eingesetzt ist. Wenn der Außenbeutel 10 gemäß einer bevorzugten Ausgestaltung der Erfindung aus Papier, insbesondere Kraftpapier, mit einer dünnen innenliegenden heißsiegelbaren Beschichtung gebildet ist, so kann ein Verschluss der Verpackungsbeutelanordnung insgesamt und auch die Verbindung von Außenbeutel 10 mit Innenbeutel 50 durch eine Verschlussnaht 1 erfolgen. Die Verschlussnaht 1 kann beispielsweise eine Höhe zwischen 1 cm und 5 cm aufweisen.

Sofern die Verschlussnaht 1 permanent ist, müssen - wie nachfolgend weiter beschrieben - gegebenenfalls Kopfstücke 20, 60 des Außenbeutels 10 bzw. des Innenbeutels 50 als miteinander verbundener Restabfall entsorgt werden. Wie sich aus der allgemeinen Beschreibung ergibt, sind jedoch auch peelbare Verbindungen zum Zwecke eines verbesserten Recyclings grundsätzlich möglich.

Wie bereits zuvor erläutert, werden der Außenbeutel 10 und der Innenbeutel 50 in einem unteren Bereich durch das eingefüllte Füllgut 2 aufgestellt. Unmittelbar an der Verschlussnaht 1 sind die Seitenfalten 12, 52 jedoch weiterhin zwischen den zugeordneten Frontwänden 11, 51 eingefaltet. Nach dem Befüllen ist gegebenenfalls auf ein korrektes Zurückfalten der Seitenfalten 12, 52 im Kopfbereich zu achten.

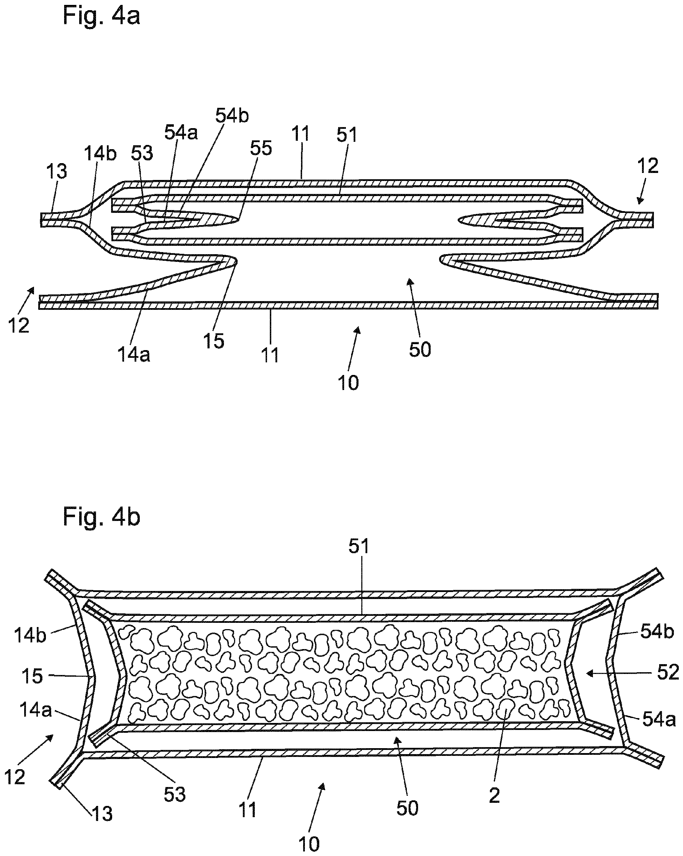

In diesem Zusammenhang zeigt die Fig. 4 die Anordnung von Außenbeutel 10 und Innenbeutel 50 in einem Bereich unmittelbar unterhalb der Verschlussnaht 1. Es ist zu erkennen, dass die Seitenfalten 52 des Innenbeutels 50 mit den entsprechenden Randbereichen der Frontwände 51 des Innenbeutels 50 in dem Kopfbereich jeweils mit ihren beiden Seitenfaltenhälften 54a, 54b zwischen einer Seitenfaltenhälfte 17b der zugeordneten Seitenfalte 12 des Außenbeutels 10 sowie der angrenzenden Frontwand 51 des Außenbeutels 10 angeordnet sind.

Die in der Fig. 3 ausschnittsweise dargestellte Verpackungsbeutelanordnung zeichnet sich aufgrund der Längssiegelnähte 13, 53 von Außenbeutel 10 und Innenbeutel 50 sowie durch die separaten Abschnitte 16, 56 durch sehr gute Funktionseigenschaften aus. Die sichtbare Außenseite der Verpackungsbeutelanordnung wird ausschließlich von dem Außenbeutel 10 auf Papierbasis gebildet, der vorzugsweise eine Schicht aus Papier insbesondere Kraftpapier als Hauptbestandteil aufweist.

Der Außenbeutel 10 kann unbeschichtet sein, so dass dieser dann ausschließlich aus Kraftpapier gebildet ist. Um jedoch vorzugsweise die Längsnähte 13 des Außenbeutels und auch die Verschlussnaht 1 durch Heißsiegeln bilden zu können, kann das üblicherweise ein Flächengewicht zwischen 30 g/m² und 120 g/m² aufweisende Papier auch eine vorzugsweise dünne heißsiegelbare Beschichtung an der Innenseite des Außenbeutels 10 aufweisen. Vorzugsweise weist eine solche heißsiegelbare Schicht an der Innenseite des Außenbeutels 10 eine Dicke zwischen 0,5 µm und 10 µm auf. Besonders bevorzugt wird hierfür ein biologisch abbaubares Polymer eingesetzt, so dass der Außenbeutel 10 vorzugsweise auch im Rahmen eines Papierrecyclings wiederverwertet werden kann oder zumindest eine problemlose Kompostierung möglich ist.

Während gemäß der Fig. 3 sämtliche Aufdrucke wie Logos, Dekore und Verbrauchsinformationen an dem Außenbeutel 10 angeordnet werden können, kann der Innenbeutel 50 frei oder zumindest weitgehend frei von Aufdrucken und Farbstoffen, insbesondere Pigmenten sein. Dabei ist auch zu beachten, dass durch den Außenbeutel 10 auf Papierbasis ein gewisser Lichtschutz des Füllgutes 2 erreicht wird.

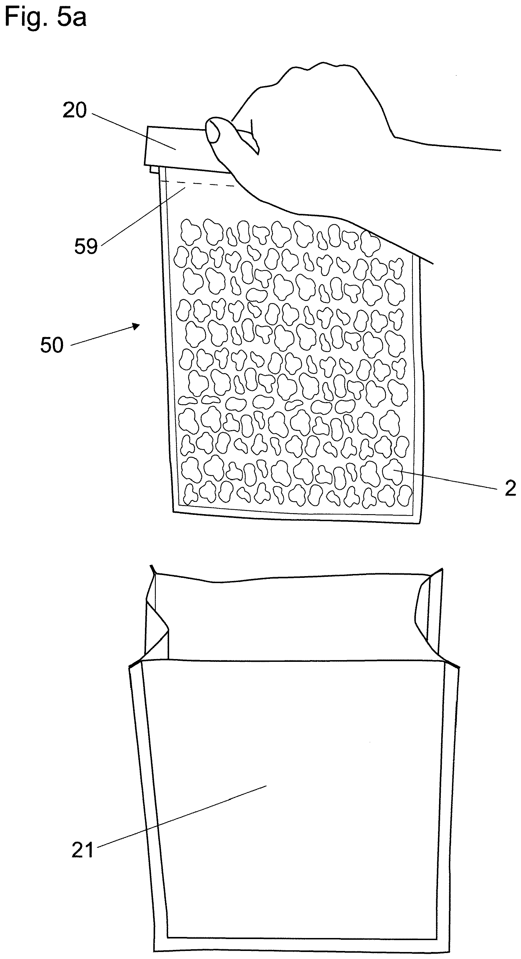

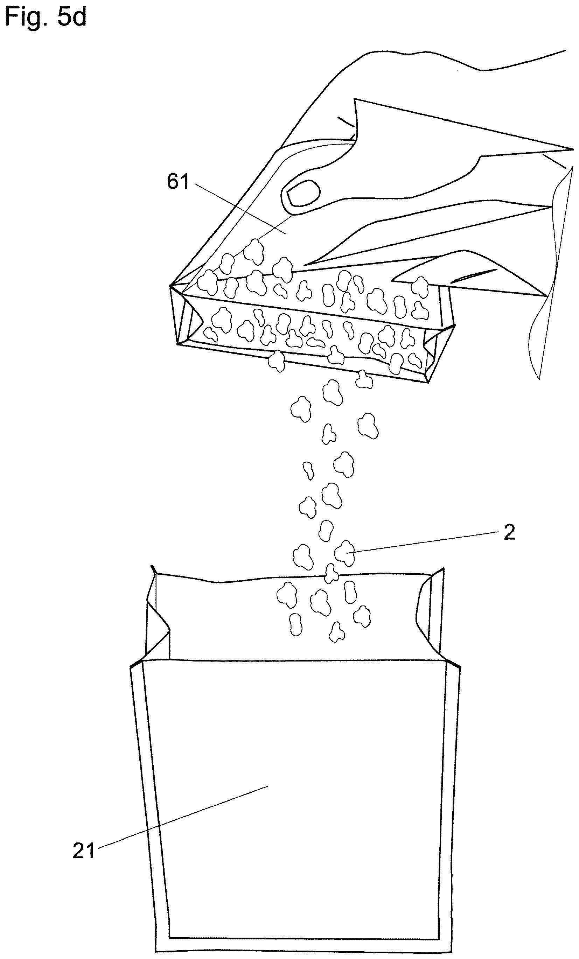

Die Fig. 5a zeigt die Verpackungsbeutelanordnung nach dem Aufreißen, wobei das Kopfstück 20 von einem Hauptkörper 21 des Außenbeutels 10 entfernt ist. Da der Innenbeutel 50 aus einer klaren, nicht eingefärbten Kunststofffolie gebildet und aus dem Hauptkörper 21 des Außenbeutels 10 herausgehoben ist, ist das Füllgut 2 dann unmittelbar in dem Innenbeutel 50 sichtbar.

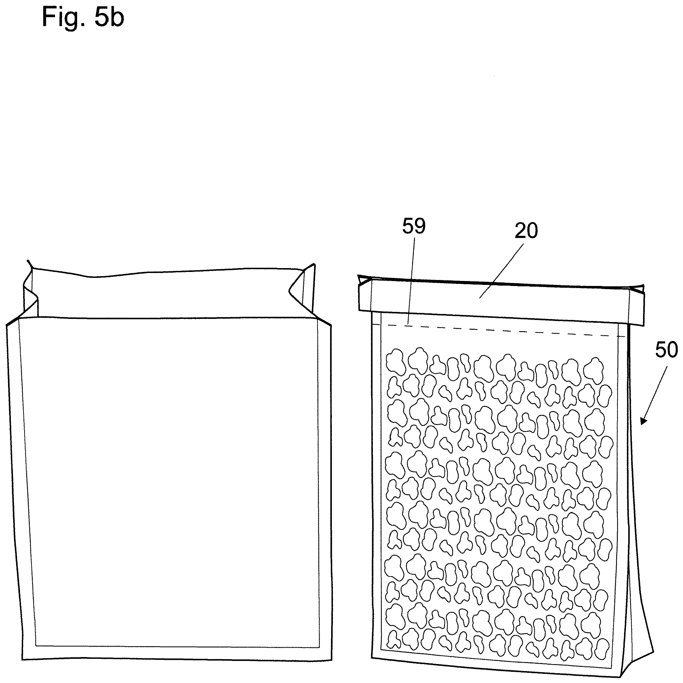

Aus der Fig. 5b ist ersichtlich, dass sowohl der Hauptkörper 21 des Außenbeutels 10 als auch der entnommene Innenbeutel 50 aufgrund des zuvor beschriebenen Flachbodens beide eine gute Standfestigkeit aufweisen.

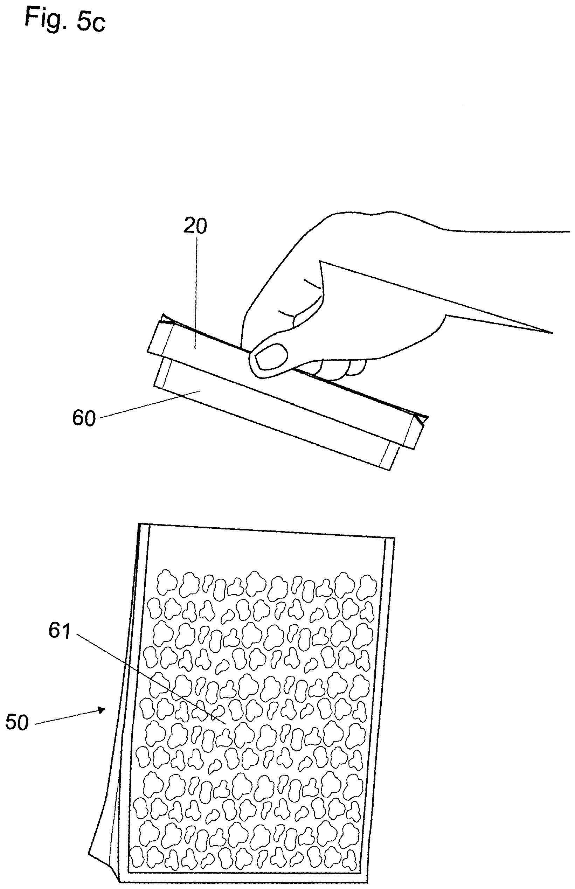

In der Fig. 5c ist exemplarisch dargestellt, dass der Innenbeutel 50 entlang der zugeordneten Aufreißhilfe 58 geöffnet werden kann, wobei dann auch bei dem Innenbeutel 50 ein Kopfstück 60 von einem Hauptkörper 61 abgetrennt wird. Bei einer festen Versiegelung der Kopfstücke 20, 60 von Außenbeutel 10 und Innenbeutel 50 kann dieses Mischmaterial dann getrennt entsorgt werden. Die beiden Hauptköper 21, 61 können jedoch optimal entsorgt werden.

Sofern der Außenbeutel 10 und insbesondere der Hauptkörper 21 des Außenbeutels 10 unbeschichtet ist oder lediglich eine biologisch abbaubare Beschichtung aufweist, kann der Hauptkörper 21 auch kompostiert werden bzw. bei einem unachtsamen Wegwerfen im Freien verrotten.

Dabei ist es beispielsweise auch möglich, das Füllgut 2 nach dem Öffnen des Innenbeutels 50 in den Hauptkörper 21 des Außenbeutels 10 einzufüllen. Da der Außenbeutel 10 auf Papierbasis gebildet ist, wird dieser von Benutzern häufiger angenehmer als ein herkömmlicher Kunststoffbeutel empfunden. Bei dem Füllgut 2 kann es sich beispielsweise um Popcorn, Chips oder andere Arten von Salzgebäck handeln.

Im Sinne eines verbesserten Abfallmanagement auf Großveranstaltungen kann beispielsweise das zunächst sicher und langfristig in der Verpackungsbeutelanordnung geschützte Füllgut 2 von einer Verkaufsperson in den Hauptkörper 21 des Außenbeutels umgefüllt werden. Es sind somit auch Abfallkonzepte umsetzbar, bei dem einem Benutzer ausschließlich kompostierbare Produkte einschließlich Verpackungen ausgehändigt werden.

## Patentansprüche

1. Verpackungsbeutelanordnung mit einem Außenbeutel (10) auf Papierbasis und einem von dem Außenbeutel (10) umgebenen Innenbeutel (50) aus Kunststofffolie, wobei der Innenbeutel (50) und der Außenbeutel (10) jeweils zwei einander gegenüberliegende Frontwände (11, 51) und zwei zwischen den Frontwänden (11, 51) angeordnete Seitenfalten (12, 52) aufweisen und wobei der Innenbeutel (50) und der Außenbeutel (10) zumindest unterhalb eines Kopfbereiches im Wesentlichen unverbunden sind, **dadurch gekenn-zeichnet**, dass der Außenbeutel (10) und/oder der Innenbeutel (50) die jeweiligen Frontwände (11, 51) mit den anschließenden Seitenfalten (12, 52) verbindende Längsnähte (13, 53) aufweist.

2. Verpackungsbeutelanordnung nach Anspruch 1, **dadurch gekennzeichnet, dass** der Außenbeutel (10) und der Innenbeutel (50) die jeweiligen Frontwände (11, 51) mit den anschließenden Seitenfalten (12, 52) verbindende Längsnähte (13, 53) aufweist, welche zumindest unterhalb des Kopfbereiches untereinander unverbunden sind.

3. Verpackungsbeutelanordnung nach Anspruch 1 oder 2, **dadurch gekennzeichnet, dass** der Außenbeutel (10) und der Innenbeutel (50) an dem Kopfbereich miteinander verbunden sind.

4. Verpackungsbeutelanordnung nach einem der Ansprüche 1 bis 3, **dadurch gekennzeichnet, dass** der Innenbeutel (50) dicht verschlossen ist.

5. Verpackungsbeutelanordnung nach einem der Ansprüche 1 bis 4, **dadurch gekennzeichnet, dass** die Frontwände (51) des Innenbeutels (50) eine geringere Breite als die Frontwände (11) des Außenbeutels (10) aufweisen.

6. Verpackungsbeutelanordnung nach einem der Ansprüche 1 bis 5, **dadurch gekennzeichnet, dass** die Längsnähte (13, 53) eine Breite zwischen 2 mm und 12 mm aufweisen.

7. Verpackungsbeutelanordnung nach einem der Ansprüche 1 bis 6, **dadurch gekennzeichnet, dass** der Außenbeutel (10) an einer Innenseite zumindest abschnittsweise eine heißsiegelbare Schicht aufweist und dass die Längsnähte (13) des Außenbeutels (10) als Heißsiegelnähte ausgebildet sind.

8. Verpackungsbeutelanordnung nach Anspruch 7, **dadurch gekennzeichnet, dass** die heißsiegelbare Schicht an der Innenseite des Außenbeutels (10) eine Dicke zwischen 0,5 µm und 10 µm aufweist.

9. Verpackungsbeutelanordnung nach Anspruch 7 oder 8, **dadurch gekennzeichnet, dass** die heißsiegelbare Schicht an der Innenseite des Außenbeutels (10) aus einem biologisch abbaubaren Material besteht.

10. Verpackungsbeutelanordnung nach einem der Ansprüche 1 bis 9, **dadurch gekennzeichnet, dass** der Außenbeutel (10) eine Papierlage mit einem Flächengewicht zwischen 30 g/m² und 120 g/m² aufweist.

11. Verpackungsbeutelanordnung nach einem der Ansprüche 1 bis 10, **dadurch gekennzeichnet, dass** der Innenbeutel (50) sortenrein aus Kunststoff einer Polymerklasse, insbesondere einem Polyolefin gebildet ist.

12. Verpackungsbeutelanordnung nach einem der Ansprüche 1 bis 11, **dadurch gekennzeichnet, dass** der Innenbeutel (50) aus einer mehrschichtigen Folie gebildet ist, wobei eine Innenschicht und eine Außenschicht unterschiedliche Heißsiegeleigenschaften aufweisen.

13. Verpackungsbeutelanordnung nach Anspruch 12, **dadurch gekennzeichnet, dass** die Innenschicht bei einer Heißsiegelung gegen sich selbst eine unauftrennbare Verbindung bildet.

14. Verpackungsbeutelanordnung nach Anspruch 12 oder 13, **dadurch gekennzeichnet, dass** die Außenschicht eine die Siegelfähigkeit reduzierende Beimischung aufweist.

15. Verpackungsbeutelanordnung nach einem der Ansprüche 12 bis 14, **dadurch gekennzeichnet, dass** die Innenschicht eine geringere Siegeltemperatur als die Außenschicht aufweist.

16. Verpackungsbeutelanordnung nach einem der Ansprüche 1 bis 15, **dadurch gekennzeichnet, dass** bei dem Innenbeutel (50) und bei dem Außenbeutel (10) jeweils die Seitenfalten (12, 52) in dem Kopfbereich mit zwei Seitenfaltenhälften (14a, 14b, 54a, 54b) und einer Knicklinie zwischen den Seitenfaltenhälften (14a, 14b, 54a, 54b) zwischen den zugeordneten Frontwänden (11, 51) eingefaltet sind.

17. Verpackungsbeutelanordnung nach Anspruch 16, **dadurch gekennzeichnet, dass** die Seitenfalten (52) des Innenbeutels (50) in dem Kopfbereich jeweils mit ihren beiden Seitenfaltenhälften (54a, 54b) zwischen einer Seitenfaltenhälfte (14b) der zugeordneten Seitenfalte (12) des Außenbeutels (10) sowie der angrenzenden Frontwand (11) des Außenbeutels (10) angeordnet sind.

18. Verpackungsbeutelanordnung nach einem der Ansprüche 1 bis 17, **dadurch gekennzeichnet, dass** der Außenbeutel (10) in dem Kopfbereich über den Innenbeutel (50) vorsteht.

19. Verpackungsbeutelanordnung nach einem der Ansprüche 1 bis 18, **dadurch gekennzeichnet, dass** der Innenbeutel (50) unbedruckt und/oder frei von Farbstoffen ist.

20. Verpackungsbeutelanordnung nach einem der Ansprüche 1 bis 19, **dadurch gekennzeichnet, dass** der Außenbeutel (10) und der Innenbeutel (50) in dem Kopfbereich trennbar verbunden sind.

21. Verpackungsbeutelanordnung nach einem der Ansprüche 1 bis 20, **dadurch gekennzeichnet, dass** der Außenbeutel (10) und/oder der Innenbeutel (50) einen Flachboden aufweist, der mittels Verbindungsnähten (17a, 17b, 57a, 57b) an die zugeordneten Frontwände (11, 51) und Seitenfalten (12, 52) anschließt.

22. Verpackungsbeutelanordnung nach einem der Ansprüche 1 bis 21, **dadurch gekennzeichnet, dass** der Innenbeutel (50) einen Wiederverschluss aufweist.

23. Verpackungsbeutelanordnung nach einem der Ansprüche 1 bis 22, **dadurch gekennzeichnet, dass** der Außenbeutel (10) und der Innenbeutel (50) unterhalb des Kopfbereiches jeweils eine Aufreißhilfe (18, 58) aufweisen.

24. Verpackungsbeutelanordnung nach einem der Ansprüche 1 bis 23, **dadurch gekennzeichnet, dass** das Volumen des Innenbeutels (50) zwischen 65 % und 98 %, insbesondere zwischen 75 % und 96 % des Volumens des Außenbeutels (10) beträgt.

25. Verfahren zur Herstellung einer Verpackungsbeutelanordnung nach einem der Ansprüche 1 bis 24, wobei
ein Außenbeutel (10) auf Papierbasis mit zwei einander gegenüberliegenden Frontwänden (11), zwei Seitenfalten (12) zwischen den Frontwänden (11) sowie die Frontwände (11) mit den Seitenfalten (12) verbindenden Längsnähten (13) gebildet wird,
ein Innenbeutel (50) aus Kunststofffolie mit zwei einander gegenüberliegenden Frontwänden (51), zwei Seitenfalten (52) zwischen den Frontwänden (51) sowie die Frontwände (51) mit den Seitenfalten (52) verbindenden Längsnähten (53) gebildet wird,
der Innenbeutel (50) in den Außenbeutel (10) eingesetzt wird,
der Innenbeutel (50) mit einem Füllgut befüllt und nachfolgend verschlossen wird und
der Innenbeutel (50) und der Außenbeutel (10) in einem Kopfbereich miteinander verbunden werden.

26. Verfahren nach Anspruch 25, wobei für den Innenbeutel (50) und/oder den Außenbeutel (10) die Frontwände (11, 51) und die Seitenfalten (12, 52) aus separaten Abschnitten (16, 56) gebildet werden, die durch die Längsnähte (13, 53) miteinander verbunden werden.

27. Verfahren nach Anspruch 26, wobei für den Innenbeutel (50) und/oder den Außenbeutel (10) ein separater Abschnitt (16, 56) als Flachboden bereitgestellt und an Verbindungsnähten (17a, 17b, 57a, 57b) mit den zugeordneten Frontwänden (11, 51) und Seitenfalten (12, 52) verbunden wird.

28. Verfahren zur Handhabung einer befüllten und verschlossenen Verpackungsbeutelanordnung nach einem der Ansprüche 1 bis 24, wobei
der Außenbeutel (10) unterhalb einer Verbindung von Außenbeutel (10) und Innenbeutel (50) an dem Kopfbereich aufgerissen wird, so dass ein Kopfstück (20) des Außenbeutels (10) von einem Hauptkörper (21) des Außenbeutels (10) abgetrennt wird und der Innenbeutel (50) gegenüber dem Hauptkörper (21) des Außenbeutels (10) im Wesentlichen unverbunden ist,
wobei nachfolgend ein Kopfstück (60) des Innenbeutels (50) von einem Hauptkörper des Innenbeutels (50) abgetrennt wird,
der Hauptkörper (21) des Außenbeutels (10) und der Hauptkörper (61) des Innenbeutels (50) getrennt voneinander entsorgt werden.

29. Verfahren nach Anspruch 28, wobei das Kopfstück (20) des Außenbeutels (10) an dem Kopfstück (20) des Innenbeutels (50) verbleibt und separat zu dem Hauptkörper (21) des Außenbeutels (10) und dem Hauptkörper (61) des Innenbeutels (50) entsorgt wird.

30. Verfahren nach Anspruch 28 oder 29, wobei in dem Innenbeutel (50) aufgenommenes Füllgut (2) nach dem Aufreißen des Innenbeutels (50) in den Hauptkörper (61) des Außenbeutels (10) geschüttet wird.

## Claims

1. Packaging bag assembly comprising a paper-based outer bag (10) and an inner bag (50) made of plastic film surrounded by the outer bag (10), wherein the inner bag (50) and the outer bag (10) each have two opposite front walls (11, 51) and two side gussets (12, 52) arranged between the front walls (11, 51) and wherein the inner bag (50) and the outer bag (10) are substantially unconnected at least below a head area, **characterized in that** the outer bag (10) and/or the inner bag (50) has longitudinal seams (13, 53) connecting the respective front walls (11, 51) to the adjoining side gussets (12, 52).

2. Packaging bag assembly according to Claim 1, **characterized in that** the outer bag (10) and the inner bag (50) have longitudinal seams (13, 53) connecting the respective front walls (11, 51) to the adjoining side gussets (12, 52), which are unconnected to each other at least below the head area.

3. Packaging bag assembly according to Claim 1 or 2, **characterized in that** the outer bag (10) and the inner bag (50) are connected to each other at the head area.

4. Packaging bag assembly according to one of Claims 1 to 3, **characterized in that** the inner bag (50) is tightly closed.

5. Packaging bag assembly according to one of Claims 1 to 4, **characterized in that** the front walls (51) of the inner bag (50) have a smaller width than the front walls (11) of the outer bag (10).

6. Packaging bag assembly according to one of Claims 1 to 5, **characterized in that** the longitudinal seams (13, 53) have a width of between 2 mm and 12 mm.

7. Packaging bag assembly according to one of Claims 1 to 6, **characterized in that** the outer bag (10) has a heat-sealable layer at least in sections on an inner side and that the longitudinal seams (13) of the outer bag (10) are configured as heat-sealed seams.

8. Packaging bag assembly according to Claim 7, **characterized in that** the heat-sealable layer on the inner side of the outer bag (10) has a thickness of between 0.5 µm and 10 µm.

9. Packaging bag assembly according to Claim 7 or 8, **characterized in that** the heat-sealable layer on the inner side of the outer bag (10) consists of a biodegradable material.

10. Packaging bag assembly according to one of Claims 1 to 9, **characterized in that** the outer bag (10) has a paper layer with a basis weight of between 30 g/m² and 120 g/m².

11. Packaging bag assembly according to one of Claims 1 to 10, **characterized in that** the inner bag (50) is made of a single type of plastic from a polymer class, in particular a polyolefin.

12. Packaging bag assembly according to one of Claims 1 to 11, **characterized in that** the inner bag (50) is formed from a multi-layer film, wherein an inner layer and an outer layer have different heat sealing properties.

13. Packaging bag assembly according to Claim 12, **characterized in that** the inner layer forms an inseparable bond when heat-sealed to itself.

14. Packaging bag assembly according to Claim 12 or 13, **characterized in that** the outer layer has an admixture which reduces the sealability.

15. Packaging bag assembly according to one of Claims 12 to 14, **characterized in that** the inner layer has a lower sealing temperature than the outer layer.

16. Packaging bag assembly according to one of Claims 1 to 15, **characterized in that** in the inner bag (50) and in the outer bag (10) the side gussets (12, 52) in the head area having two side gusset halves (14a, 14b, 54a, 54b) and a folding line between the side gusset halves (14a, 14b, 54a, 54b) are folded between the associated front walls (11, 51).

17. Packaging bag assembly according to Claim 16, **characterized in that** the side gussets (52) of the inner bag (50) in the head area are each arranged with their two side gusset halves (54a, 54b) between one side gusset half (14b) of the associated side gusset (12) of the outer bag (10) and the adjacent front wall (11) of the outer bag (10).

18. Packaging bag assembly according to one of Claims 1 to 17, **characterized in that** the outer bag (10) projects beyond the inner bag (50) in the head area.

19. Packaging bag assembly according to one of Claims 1 to 18, **characterized in that** the inner bag (50) is unprinted and/or free of colorants.

20. Packaging bag assembly according to one of Claims 1 to 19, **characterized in that** the outer bag (10) and the inner bag (50) are separably connected in the head area.

21. Packaging bag assembly according to one of Claims 1 to 20, **characterized in that** the outer bag (10) and/or the inner bag (50) has a flat bottom which adjoins the associated front walls (11, 51) and side gussets (12, 52) by means of connecting seams (17a, 17b, 57a, 57b).

22. Packaging bag assembly according to one of Claims 1 to 21, **characterized in that** the inner bag (50) has a reclosure.

23. Packaging bag assembly according to one of Claims 1 to 22, **characterized in that** the outer bag (10) and the inner bag (50) each have a tear-off aid (18, 58) below the head area.

24. Packaging bag assembly according to one of Claims 1 to 23, **characterized in that** the volume of the inner bag (50) is between 65% and 98%, in particular between 75% and 96%, of the volume of the outer bag (10).

25. Method of manufacturing a packaging bag assembly according to any one of Claims 1 to 24, wherein
a paper-based outer bag (10) is formed with two opposite front walls (11), two side gussets (12) between the front walls (11), and longitudinal seams (13) connecting the front walls (11) with the side gussets (12),
an inner bag (50) made of plastic film is formed with two opposite front walls (51), two side gussets (52) between the front walls (51) and longitudinal seams (53) connecting the front walls (51) with the side gussets (52),
the inner bag (50) is inserted into the outer bag (10),
the inner bag (50) is filled with a product and then closed and
the inner bag (50) and the outer bag (10) are joined to one another in a head area.

26. Method according to Claim 25, wherein for the inner bag (50) and/or the outer bag (10) the front walls (11, 51) and the side gussets (12, 52) are formed from separate sections (16, 56) which are connected to one another by the longitudinal seams (13, 53).

27. Method according to Claim 26, wherein a separate section (16, 56) is provided as a flat bottom for the inner bag (50) and/or the outer bag (10) and is connected to the associated front walls (11, 51) and side gussets (12, 52) at connecting seams (17a, 17b, 57a, 57b).

28. Method for handling a filled and closed packaging bag assembly according to any one of Claims 1 to 24, wherein
the outer bag (10) is torn open at the head area below a join of outer bag (10) and inner bag (50) such that a head piece (20) of the outer bag (10) is separated from a main body (21) of the outer bag (10) and the inner bag (50) is substantially unconnected to the main body (21) of the outer bag (10),
wherein subsequently a head piece (60) of the inner bag (50) is separated from a main body of the inner bag (50),
the main body (21) of the outer bag (10) and the main body (61) of the inner bag (50) are disposed of separately.

29. Method according to Claim 28, wherein the head piece (20) of the outer bag (10) remains on the head piece (20) of the inner bag (50) and is disposed of separately from the main body (21) of the outer bag (10) and the main body (61) of the inner bag (50).

30. Method according to Claim 28 or 29, wherein product (2) contained in the inner bag (50) is poured into the main body (61) of the outer bag (10) after tearing open the inner bag (50).

## Revendications

1. Système de sachet d'emballage comportant un sachet extérieur (10) à base de papier et un sachet intérieur (50) en matière plastique entouré par le sachet extérieur (10), le sachet intérieur (50) et le sachet extérieur (10) présentant respectivement deux parois avant opposées (11, 51) et deux plis latéraux (12, 52) disposés entre les parois avant (11, 51) et le sachet intérieur (50) et le sachet extérieur (10) n'étant sensiblement pas connectés du moins en dessous d'une zone sommitale, **caractérisé en ce que** le sachet intérieur (50) et/ou le sachet extérieur (10) présentent les soudures longitudinales (13, 53) connectant les parois avant respectives (11, 51) aux plis latéraux suivants (12, 52).

2. Système de sachet d'emballage selon la revendication 1, **caractérisé en ce que** le sachet intérieur (50) et le sachet extérieur (10) présentent les soudures longitudinales (13, 53) connectant les parois avant respectives (11, 51) aux plis latéraux suivants (12, 52), lesquelles soudures longitudinales ne sont pas connectées les unes aux autres du moins en dessous de la zone sommitale.

3. Système de sachet d'emballage selon la revendication 1 ou 2, **caractérisé en ce que** le sachet intérieur (50) et le sachet extérieur (10) sont connectés l'un à l'autre par la zone sommitale.

4. Système de sachet d'emballage selon une des revendications 1 à 3, **caractérisé en ce que** le sachet intérieur (50) est fermé hermétiquement.

5. Système de sachet d'emballage selon une des revendications 1 à 4, **caractérisé en ce que** les parois avant (51) du sachet intérieur (50) présentent une plus faible largeur que les parois avant (11) du sachet extérieur (10).

6. Système de sachet d'emballage selon une des revendications 1 à 5, **caractérisé en ce que** les soudures longitudinales (13, 53) présentent une largeur de 2 mm à 12 mm.

7. Système de sachet d'emballage selon une des revendications 1 à 6, **caractérisé en ce que** le sachet extérieur (10) présente sur une face intérieure, du moins par sections, une couche thermoscellable et que les soudures longitudinales (13) du sachet extérieur (10) sont réalisés sous forme de soudures thermoscellées.

8. Système de sachet d'emballage selon la revendication 7, **caractérisé en ce que** la couche thermoscellable présente, sur la face intérieure du sachet extérieur (10), une épaisseur de 0,5 µm à 10 µm.

9. Système de sachet d'emballage selon la revendication 7 ou 8, **caractérisé en ce que** la couche thermoscellable de la couche intérieure du sachet extérieur (10) est composée d'un matériau biodégradable.

10. Système de sachet d'emballage selon une des revendications 1 à 9, **caractérisé en ce que** le sachet extérieur (10) présente une couche de papier ayant un grammage de 30 g/m² à 120 g/m².

11. Système de sachet d'emballage selon une des revendications 1 à 10, **caractérisé en ce que** le sachet intérieur (50) est composé en pureté variétale de matière plastique d'une classe des polymères, en particulier d'une polyoléfine.

12. Système de sachet d'emballage selon une des revendications 1 à 11, **caractérisé en ce que** le sachet intérieur (50) est constitué d'un film multicouche, une couche intérieure et une couche extérieure présentant des propriétés de thermoscellage différentes.

13. Système de sachet d'emballage selon la revendication 12, **caractérisé en ce que** la couche intérieure, lors d'un thermoscellage, établit une connexion inséparable avec elle-même.

14. Système de sachet d'emballage selon la revendication 12 ou 13, **caractérisé en ce que** la couche extérieure présente un mélange réduisant l'aptitude au scellage.

15. Système de sachet d'emballage selon une des revendications 12 à 14, **caractérisé en ce que** la couche intérieure présente une température de scellage inférieure à celle de la couche extérieure.

16. Système de sachet d'emballage selon une des revendications 1 à 15, **caractérisé en ce que**, dans le sachet intérieur (50) et dans le sachet extérieur (10), les plis latéraux (12, 52) sont respectivement pliés vers l'intérieur dans la zone sommitale avec deux demi-plis latéraux (14a, 14b, 54a, 54b) et une ligne de pliage entre les demi-plis latéraux (14a, 14b, 54a, 54b) entre les parois avant associées (11, 51).

17. Système de sachet d'emballage selon la revendication 16, **caractérisé en ce que** les plis latéraux (52) du sachet intérieur (50) sont disposés dans la zone sommitale respectivement par leurs deux demi-plis latéraux (54a, 54b) entre un demi-pli latéral (14b) des plis latéraux associés (12) du sachet extérieur (10) et la paroi avant contiguë (11) du sachet extérieur (10).

18. Système de sachet d'emballage selon une des revendications 1 à 17, **caractérisé en ce que** le sachet extérieur (10) dépasse du sachet intérieur (50) dans la zone sommitale.

19. Système de sachet d'emballage selon une des revendications 1 à 18, **caractérisé en ce que** le sachet intérieur (50) n'est pas imprimé et/ou est exempt de colorants.

20. Système de sachet d'emballage selon une des revendications 1 à 19, **caractérisé en ce que** le sachet intérieur (50) et le sachet extérieur (10) sont connectés ode manière dissociable dans la zone sommitale.

21. Système de sachet d'emballage selon une des revendications 1 à 20, **caractérisé en ce que** le sachet extérieur (10) et/ou le sachet intérieur (50) présentent un fond plat qui se raccorde par des cordons de connexion (17a, 17b, 57a, 57b) aux parois avant associées (11, 51) et aux plis latéraux (12, 52).

22. Système de sachet d'emballage selon une des revendications 1 à 21, **caractérisé en ce que** le sachet intérieur (50) présente un système de refermeture.

23. Système de sachet d'emballage selon une des revendications 1 à 22, **caractérisé en ce que** le sachet extérieur (10) et le sachet intérieur (50) présentent respectivement une aide au déchirement (18, 58) en-dessous de la zone sommitale.

24. Système de sachet d'emballage selon une des revendications 1 à 23, **caractérisé en ce que** le volume du sachet intérieur (50) représente de 65 % à 98 %, en particulier de 75 % à 96 %, du volume du sachet extérieur (10).

25. Procédé de fabrication d'un système de sachet d'emballage selon une des revendications 1 à 24, dans lequel
un sachet extérieur (10) à base de papier est constitué avec deux parois avant opposées l'une à l'autre (11), deux plis latéraux (12) entre les parois avant (11) et les parois avant (11) avec des soudures longitudinales (13) connectant les plis latéraux (12),
un sachet intérieur (50) en film de matière plastique est constitué avec deux parois avant opposées (51), deux plis latéraux entre les parois avant (51) et les parois avant (51) avec des soudures longitudinales (53) connectant les plis latéraux (52),
le sachet intérieur (50) est inséré dans le sachet extérieur (10),
le sachet intérieur (50) est rempli d'un produit et est ensuite fermé et
le sachet intérieur (50) et le sachet extérieur (10) sont connectés l'un à l'autre dans une zone sommitale.

26. Procédé selon la revendication 25, dans lequel, pour le sachet intérieur (50) et/ou le sachet extérieur (10), les parois avant (11, 51) et les plis latéraux (12, 52) sont constitués de sections séparées (16, 56) qui sont connectées les unes aux autres par les soudures longitudinales (13, 53).

27. Procédé selon la revendication 26, dans lequel, dans le sachet intérieur (50) et/ou le sachet extérieur (10), une section séparée (16, 56) se présentant sous forme d'un fond plat est mise à disposition et est connectée par des cordons de connexion (17a, 17b, 57a, 57b) aux parois avant associées (11, 51) et aux plis latéraux (12, 52).

28. Procédé de manipulation d'un système de sachet d'emballage rempli et fermé selon une des revendications 1 à 24, dans lequel
le sachet extérieur (10) est déchiré en-dessous d'un raccord du sachet extérieur (10) du sachet intérieur (50) au niveau de la zone sommitale, de sorte qu'une pièce sommitale (20) du sachet extérieur (10) est séparée d'un corps principal (21) du sachet extérieur (10) et que le sachet intérieur (50) n'est sensiblement pas connecté au corps principal (21) du sachet extérieur (10),
une pièce sommitale (60) du sachet intérieur (50) est ensuite séparée d'un corps principal du sachet intérieur (50),
le corps principal (21) du sachet extérieur (10) et le corps principal (61) du sachet intérieur sont jetés séparément l'un de l'autre.

29. Procédé selon la revendication 28, dans lequel la pièce sommitale (20) du sachet extérieur (10) reste au niveau de la pièce sommitale (20) du sachet intérieur (50) et est jetée un séparément du corps principal (21) du sachet extérieur (10) et du corps principal (61) du sachet intérieur (50).

30. Procédé selon la revendication 28 ou 29, dans lequel le produit de remplissage (2) reçu dans le sachet intérieur (50), après déchirement du sachet intérieur (50) est déversé dans le corps principal (61) du sachet extérieur (10) .
